# EUROPEAN PATENT APPLICATION

(11) **EP 4 530 092 A1**
(43) Date of publication of application: **02.04.2025**
(21) Application number: 23200189.1
(22) Date of filing: 27.09.2023
(51) Int. Cl.: B60B 33/00, F16C 29/04

(54) **MOVABLE SUPPLY DEVICE ONBOARD AN AIRCRAFT**

(71) Applicant: Airbus Operations GmbH, 21129 Hamburg (DE)
(72) Inventor: Hegenbart, Matthias, Hamburg (DE); Benthien, Hermann, Hamburg (DE)

(57) **Abstract**

The present invention relates to a roller bearing device for a movable supply device. In order to provide an alternative solution for movable containers or other supply devices, a roller bearing device (10) for a movable supply device is provided. The roller device comprises a spherical rolling element (12), a body structure (14) providing a restraining fixture (16) for the rolling element being movably hold by the restraining fixture, and an omnidirectional load bearing (18) for the rolling element, the load bearing movably hold by the body structure. For forming the restraining fixture, a cutout (20) is provided in the body structure, the cutout being smaller than an outer diameter of the rolling element to have the rolling element extending through the cutout while still being hold by edge portions of the cutout. The body structure is a fitting for a cutting section of at least two outer surface directions of the supply device. The cutout is a cutout at the cutting section such that the rolling element protrudes from the cutting section and from both outer surface directions.

## Description

### FIELD OF THE INVENTION

The present invention relates to a roller bearing device for a movable supply device, to a movable stowage carrier for cabin service supply, to a stowage system, to a supply system for cabin service supply, to an aircraft comprising a fuselage with a cabin area and to a method for moving a container onboard a vehicle.

### BACKGROUND OF THE INVENTION

For service functions in the cabin space, movable containers are used on board of an aircraft. In order to provide movable container-like trolleys, wheels are mounted to the lower side. The wheels can be pivotable to allow facilitate steering of the containers. However, it has been shown that pivotable wheels can get stuck when trolleys are moved within narrow parking spaces.

### SUMMARY OF THE INVENTION

There may thus be a need for alternative solutions for movable containers or other supply devices.

The object of the present invention is solved by the subject-matter of the independent claims; further embodiments are incorporated in the dependent claims. It should be noted that the following described aspects of the invention apply also for the roller bearing device for a movable supply device, for the movable stowage carrier for cabin service supply, for the stowage system, for supply system for cabin service supply, for the aircraft comprising a fuselage with a cabin area and for the method for moving a container onboard a vehicle.

According to the present invention, a roller bearing device for a movable supply device is provided. The roller device comprises a spherical rolling element, a body structure providing a restraining fixture for the rolling element being movably hold by the restraining fixture and an omnidirectional load bearing for the rolling element. The load bearing is movably hold by the body structure. For forming the restraining fixture, a cutout is provided in the body structure, the cutout being smaller than an outer diameter of the rolling element to have the rolling element extending through the cutout while still being hold by edge portions of the cutout. The body structure is a fitting for a cutting section of at least two outer surface directions of the supply device. The cutout is a cutout at the cutting section such that the rolling element protrudes from the cutting section and from both outer surface directions.

As an effect, movable containers can be provided with a facilitated handling. Due to the omnidirectional spherical rollers, pivoting wheels are no longer needed and their clamping is thus omitted.

According to an example, the body structure is an edge fitting for a box-shaped container. The cutout is a cutout at the edge of the edge fitting such that the rolling element protrudes from the edge and from both outer sides of the edge fitting.

According to another example, the body structure is a corner fitting for a box-shaped container. The cutout is a cutout at the corner point of the corner fitting such that the rolling element protrudes from the corner and from all three outer sides of the corner fitting.

According to the present invention, also a movable stowage carrier for cabin service supply is provided. The carrier comprises a carrier support structure and at least three roller bearing devices according to one of the preceding examples. The carrier support structure is provided as: i) a carriage structure configured to receive a box-shaped stowage container or as ii) a box structure enclosing a stowage volume. The at least three roller bearing devices are mounted to the carrier support structure. A first and a second of the at least three roller bearing devices are provided at bottom corner portions on a first side of the carrier support structure.

According to an example, a third roller bearing device is provided at i) a bottom middle portion on a second side of the carrier support structure opposite to the first side or ii) a third corner portion, wherein the carrier support structure is provided with a triangular bottom section.

According to an example, the carriage structure is provided as a frame-like structure configured to receive one or several box-shaped stowage containers.

According to the present invention, also a stowage system for cabin service supply is provided. The stowage system comprises a plurality of the movable stowage carriers according to one of the examples above and a longitudinally extending stowage space configured to be conform with an inner wall of an aircraft fuselage structure. A guidance is provided along at least a part of the longitudinally extending stowage space.

According to an example, the guidance comprises at least one bottom guiderail on one inner side of the stowage space, which guiderail interacts with the roller bearing devices on the first side of the carrier support structure.

According to an example, the guiderail is provided for movably engaging with the spherical rolling elements of the roller bearing devices on the first side of the carrier support structure.

According to the present invention, also a supply system for cabin service supply is provided. The supply system comprises at least one trolley for moving along a cabin space of an aircraft, and a plurality of movable stowage carriers according to one of the examples above. At least one trolley is configured for reloading cabin service supply from and to the movable stowage carriers.

According to the present invention, also an aircraft comprising a fuselage with a cabin area is provided. The cabin area comprises a galley. For supply of at least the galley, it is provided at least one of the group of: i) a plurality of the movable stowage carrier for cabin service supply according to one of the examples above; ii) a stowage system for cabin service supply according to one of the examples above; and iii) a supply system for cabin service supply according to the example above.

According to the present invention, also a method for moving a container onboard a vehicle is provided. The method comprises the following steps:
- providing at least three roller bearing devices according to one of the examples described above to a container;
- moving the container along a surface, wherein the rolling elements are providing a rolling motion while supporting a load of the container.

In an example, a roller bearing device for a movable supply device is provided that comprises a spherical rolling element, a body structure providing a restraining fixture for the rolling element being movably hold by the restraining fixture, and an omnidirectional load bearing for the rolling element, the load bearing movably hold by the body structure. For forming the restraining fixture, a cutout is provided in the body structure, the cutout being smaller than an outer diameter of the rolling element to have the rolling element extending through the cutout while still being hold by edge portions of the cutout. The body structure is a fitting for an edge or corner section of the supply device. The cutout is a cutout, e.g. a spherical cutout, at the cutting section such that the rolling element protrudes from the edge or corner section and from the adjacent outer surfaces or parts of the supply device.

According to an aspect, a transport box or transport frame is provided with spherical edge cutouts for receiving spherical roller bearings. This allows maximum use of the available space, since protruding wheels as with common trolleys are avoided.

When applying three roller bearings, movement along a curved track comprising curved guiderails is possible. Hence, a longitudinal space conforming with the fuselage in the rear section of an aircraft is made possible. A three ball container is provided that is able to follow a circular path. In an option, a roller is fixed and guided by a spherical rail. The advantage of a thee point roller support is that it can follow each path and it is always statically fully determined supported.

In an example, a roller device for a movable carrier box is provided. The roller device comprises a spherical ball and a restraining fixture for the spherical ball. Further, an omnidirectional load bearing inside the restraining fixture for the spherical ball is provided. The restraining fixture is a corner fitting with a spherical cutout at the corner point. The spherical cutout is smaller than a diameter of the spherical ball to have the spherical ball extending through the spherical cutout while still being hold by edge portions of the spherical cutout.

According to an aspect, edge bearings for transport boxes are provided. The edge bearings may be provided for specific stowage space solutions with predefined surfaces on which the edge bearings can be moved smoothly.

According to an aspect, a rail and guidance system for statically fully determined transport units is provided. As an example, a curved rail and guidance system is provided suitable for being located in an aft section of an aircraft, such as behind a galley or lavatories along the fuselage and in front of the bulkhead of the aircraft.

In an option, the edge bearings together with respectively formed rails provide a rail and guidance locking system, e.g. for crash resistance.

A rail and guidance system is provided for stepwise movable transport boxes. The rail and guidance system has lateral guidance rails for the local removal of boxes.

According to an aspect, the edge bearing enables a standardized modular transport system for freight transport onboard the aircraft. The transport system can be provided within the cabin space or within the cargo space.

As an option, for integration with existing logistic setups, an external transport of transport boxes in units with double space is provided. As another option, an internal carrier is provided with guidance rails for a flexible assembly with internal freight.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a roller bearing device for a movable supply device for onboard use in an aircraft. The left part shows a first side view from a first side and the right part shows a second side view from a second side which is perpendicular to the first side.
Fig. 2 shows a cross section along cutting line A-A of the roller bearing device of Fig. 1.
Fig. 3 shows a bottom view of the roller bearing device of Fig. 1.
Fig. 4 shows a first side view of an example of a movable stowage carrier having at least three roller bearing devices shown in Fig. 1.
Fig. 5 shows a bottom view of the movable stowage carrier of Fig. 4.
Fig. 6 shows a horizontal cross section of the movable stowage carrier shown in Fig. 4.
Fig. 7 shows the movable stowage carrier of Fig. 4 in a second side view perpendicular to the first side view.
Fig. 8 shows an example of a stowage system for cabin service supply in the context of a supply system for cabin service supply.
Fig. 9 shows a detail of the stowage system shown in Fig. 8.
Fig. 10 shows another example of a stowage system for cabin service supply.
Fig. 11 shows an example of an aircraft with a supply system for cabin service supply.
Fig. 12 shows basic steps of an example of a method for moving a container onboard a vehicle.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

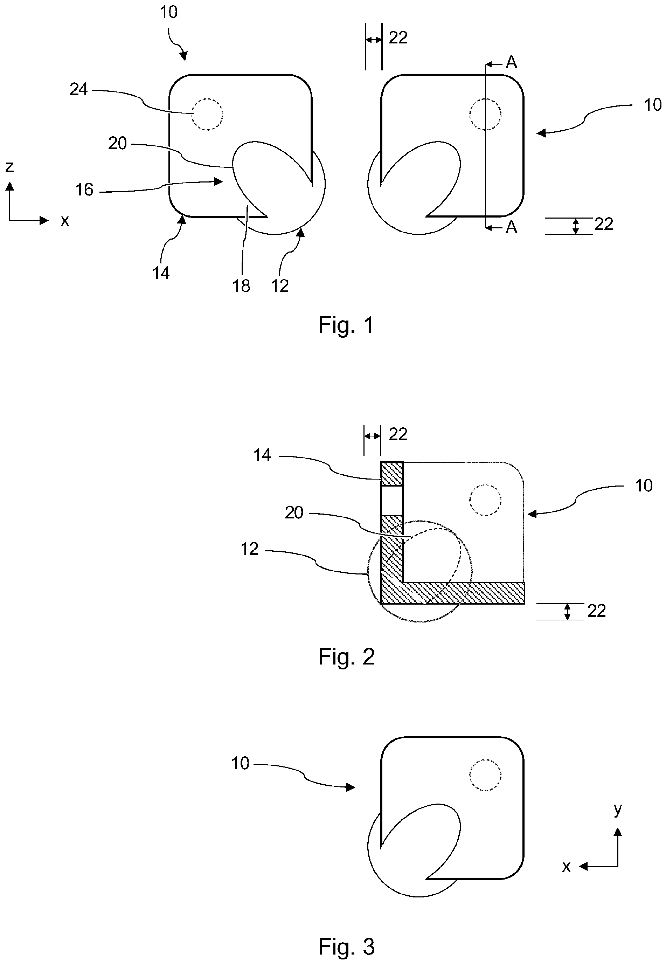

Fig. 1 schematically shows an example of a roller bearing device 10 for a movable supply device for onboard use in an aircraft. The roller bearing device 10 comprises a spherical rolling element 12 and a body structure 14 providing a restraining fixture 16 for the rolling element 12 being movably hold by the restraining fixture 16. The roller bearing device 10 also comprises an omnidirectional load bearing 18 for the rolling element 12, the load bearing 18 being movably hold by the body structure 14. For forming the restraining fixture 16, a cutout 20 is provided in the body structure 14, the cutout 20 being smaller than an outer diameter of the rolling element 12 to have the rolling element 12 extending through the cutout 20 while still being hold by edge portions of the cutout 20. The body structure 14 is a fitting for a cutting section of at least two outer surface directions of the supply device. The cutout 20 is a cutout at the cutting section such that the rolling element 12 protrudes from the cutting section 20 and from both outer surface directions.

In Fig. 1, the left part shows a first side view from a first side and the right part shows a second side view from a second side which is perpendicular to the first side.

As indicated, the rolling element 12 protrudes to extend from the body structure by a protrusion 22. The protrusion 22 is the same on all three sides. In another option, the protrusion 22 is different at least on one of the three sides.

One or several mounting bores 24 are indicated with broken lines as an option.

In an example, the cutout 20 is a spherical cutout at the cutting section.

The movable supply device can be a box-shaped container or box structure. The movable supply device can also be a carriage structure configured to receive a box or container.

The term "rolling element" relates to a bearing element that provides the support on a surface while being able to roll on the surface. The rolling element 12 provides a rolling bearing support, contrary to a sliding or gliding support.

The term "body structure" relates to a frame or bracket that provides the rigidity and stability for the device. In an example, the body structure 14 is provided by metal material or by a hard plastic material or by a composite material like carbon-fiber reinforced plastic.

The term "restraining fixture" relates to holding the rolling element in place while still allowing rotational movement of the rolling element. The restraining fixture 16 ensures an undetachable or captive hold of the rolling element. In an example, the restraining fixture 16 is an edge of an opening that is smaller than the size of the rolling element 12.

The term "omnidirectional load bearing" relates to a bearing of the rolling element 12 that allows rotational movement of the rolling element 12 in all directions. The load bearing may be provided as a plurality of smaller ball bearings 12 resting on a spherical race surface.

The term "cutout" relates to an opening in the body structure 14. The opening is defined by at least three edge portions or by a circumferential edge.

The term "fitting" relates to hardware that can be mounted to the box-shaped container. The fitting can also be referred to as fixture.

The "cutting section" relates to the portion where two surfaces at least virtually meet.

The term "cutting section of at least two outer surface directions of the supply device" refers to an edge or corner of the supply device.

In an option, the body structure 14 is a fitting for a cutting section of at least two outside surfaces of the supply device, and the cutout 20 is a spherical cutout at the cutting section such that the rolling element 12 protrudes from the cutting section and from both outside surfaces. The outside surfaces can also be referred to as outer surfaces.

As an example, for a box-shaped container as the movable supply device, the cutting section refers to where the outside surfaces meet, i.e. where they intersect with each other.

As an example, for a carriage structure like a frame, the cutting section refers to the edge or corners of such frame, wherein the frame preferably defines the outer dimensions of a container to be carried by the frame.

In case of two plane surfaces being connected, the cutting section is an edge section. In case of three plane surfaces being connected, the cutting section is a corner section.

The term "outer surface directions" relates to planes of a virtual form that encloses the supply device.

The "roller bearing device" can also be referred to as rolling bearing or rolling element bearing.

The "rolling element" can also be referred to as rolling body. The rolling element 12 can also be referred to as rolling ball, roller ball or ball. The rolling element 12 can be provided as a spherical body, such as a ball.

The box-shaped container is provided as a rectangular stowage and/or supply container for use onboard an aircraft.

The term "cutting section" refers to an exposed part of the container where at least two of its outer surfaces meet. A first example of a cutting section is an edge section, or edge, where two surfaces meet, such as a lateral side wall and a lower or bottom surface, or a front or back side wall and a lower or bottom surface (or upper or top surface). A second example of a cutting section is a corner section, or corner, where three surfaces meet, such as a lateral side wall, a front or back side wall and a lower or bottom surface (or upper or top surface).

In an option, the spherical cutout is centered at the cutting section such that the rolling element protrudes from both outside surfaces with an approximately equal amount.

Fig. 2 shows a cross section along cutting line A-A of the roller bearing device of Fig. 1. Fig. 3 shows a bottom view of the roller bearing device of Fig. 1.

In an example, the body structure is an edge fitting for a box-shaped container. The cutout is a cutout at the edge of the edge fitting such that the rolling element protrudes from the edge and from both outer sides of the edge fitting.

In an example, the cutout is a spherical cutout at the edge of the edge fitting.

The term "edge fitting" relates to a hardware being attachable to an edge of a container or frame.

The edge fitting may be provided as an angular bracket fitting. For example, the edge fitting has a body structure made from metal sheet.

In an option, the spherical cutout is centered at the edge such that the rolling element protrudes from both outer sides with an approximately equal amount.

In an example, the body structure is a corner fitting for a box-shaped container. The cutout is a cutout at the corner point of the corner fitting such that the rolling element protrudes from the corner and from all three outer sides of the corner fitting.

In an example, the cutout is a spherical cutout at the corner point of the corner fitting.

The term "corner fitting" relates to a hardware being attachable to a comer of a container or frame.

The corner point of the corner fitting may also be referred to as corner tip, corner end, corner peak or corner.

The corner fitting may be provided as a corner bracket fitting. For example, the corner fitting has a body structure made from metal sheet.

In an option, the spherical cutout is centered at the corner point that the rolling element protrudes from both all three outer sides with an approximately equal amount.

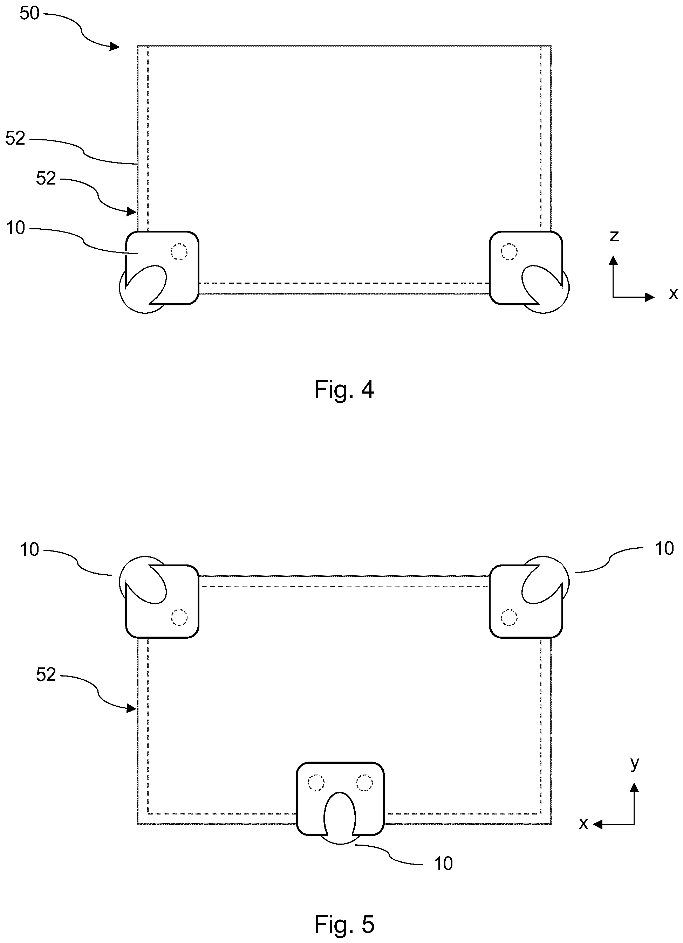

Fig. 4 shows a first side view of an example of a movable stowage carrier 50 for cabin service supply. The carrier 50 comprises a carrier support structure 52 and at least three roller bearing devices 10 according to one of the preceding examples. The carrier support structure 52 is provided as a box structure 54 enclosing a stowage volume.

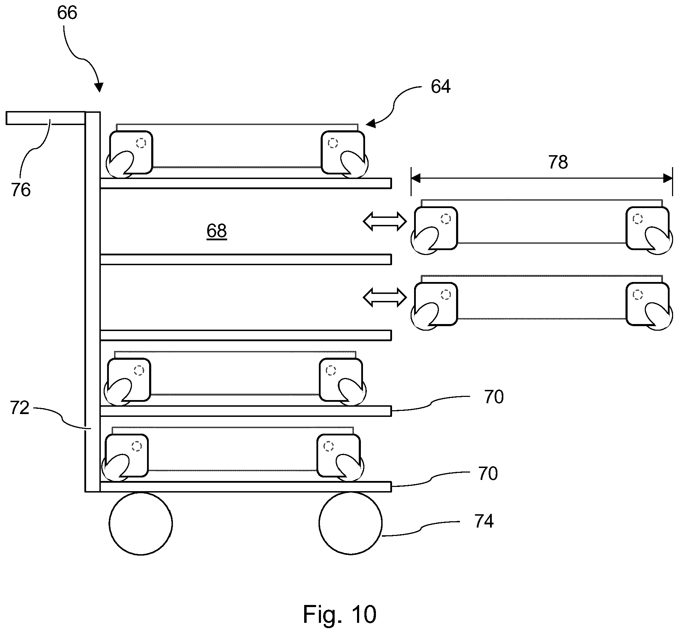

In another option, shown in Fig. 10 in the context of a stowage carrier system, the carrier support structure 52 is provided as a carriage structure 56 configured to receive a box-shaped stowage container.

At least three roller bearing devices 10 are mounted to the carrier support structure 52. A first and a second of the at least three roller bearing devices 10 are provided at bottom corner portions on a first side of the carrier support structure 52.

In a first option, a third roller bearing device 10 is provided at a bottom middle portion on a second side of the carrier support structure opposite to the first side. In a second option, the carrier support structure 52 is provided with a triangular bottom section and the third roller bearing device 10 is provided at a third corner portion.

In a further option, as shown in Fig. 5 showing a bottom view of the movable stowage carrier of Fig. 4, a third of the at least three roller bearing devices 10 is provided at a bottom side portion on a second side opposite to the first side of the carrier support structure 52.

In another option, a third roller bearing device 10 and a fourth roller bearing device 10 are provided at bottom corner portions on a second side opposite to the first side of the carrier support structure 52.

The term "carrier support structure" relates to a construction that enables the mount of the roller bearing devices and that provides structural support for the service supply stowage purpose. The carrier support structure 52 can be a frame, a platform, a bracket onto which a container for stowage purposes can be placed. The carrier support structure 52 can also be a part of a container for stowage purposes.

The term "carriage structure" relates to e.g. a frame or platform or bracket providing a structural basis for then receiving the container.

The term "box structure" relates to a box-like enclosure defining a stowage volume.

The term "bottom corner portions" relates to an orientation or location on the lower or bottom part during use.

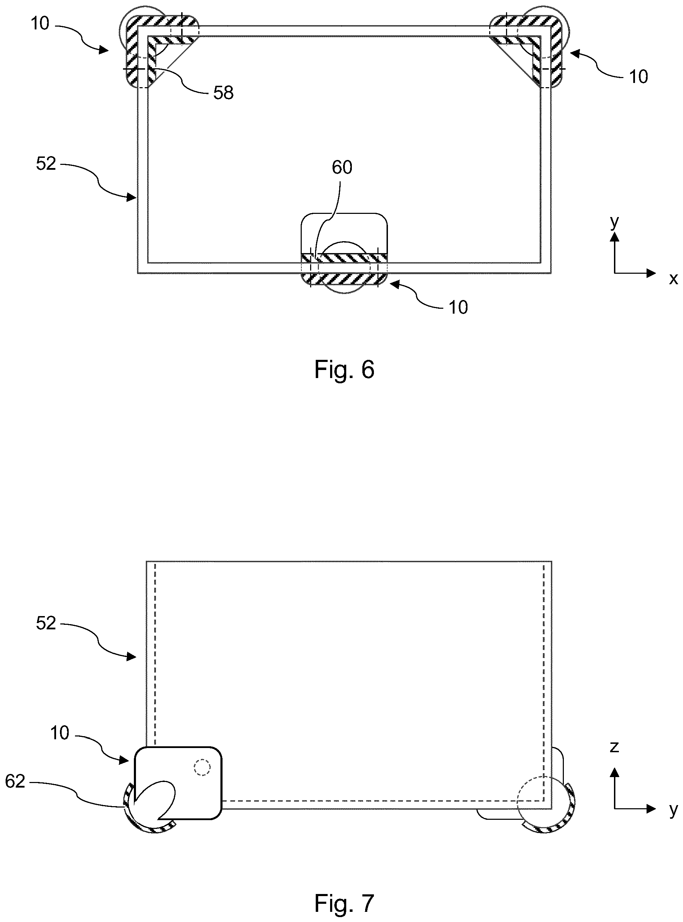

Fig. 6 shows a horizontal cross section of the movable stowage carrier 50 shown in Fig. 4. As an option, rear-side reinforcement corners 58 and a reinforcement plate 60 are provided.

Fig. 7 shows the movable stowage carrier 50 of Fig. 4 in a second side view perpendicular to the first side view.

In other words, three roller bearing devices 10 are provided at the bottom in a spaced-apart manner such that a maximum stability is achieved, for both a parking mode and a moving mode.

The term "middle portion" relates to a region along the side between two corner portions. In an example, the middle portion refers to a geometric center of the side. In another example, the middle portion refers to a range comprising the geometric center plus around 5% of a complete side length on each side of the center. In another example, the middle portion refers to a range comprising the geometric center plus around 10% to 20% on each side of the center. In another example, the middle portion refers to a range comprising the geometric center plus around 25% on each side of the center.

The term "triangular bottom section" relates to a bottom part of a container that is triangular shaped in its horizontal cross section.

To provide two roller bearing devices 10 on one side and only one on the other side allows to have the two abutting on a concave guiderail which may vary in its radius, i.e. in its bending degree, while the third roller bearing device 10 allows abutting on an inner side while avoiding that the container or box or frame may interfere with the convex rail.

In an option, one or more of the roller bearing devices 10 may be provided with a resilient horizontal hold of the spherical rolling element 12. This allows a compensation of tolerances regarding a distance between inner and outer guiderails between which the roller bearing devices 10 are moving.

In another example, not shown in detail, the carrier support structure 52 is provided with a rectangular bottom section and four of the roller bearing devices 10 are provided at the four bottom corners.

In other words, each corner is provided with a roller bearing device 10.

The term "rectangular bottom section" relates to a bottom part of a container that is having a rectangular shape in its horizontal cross section.

In an example, as also indicated in Fig. 7, the box structure is provided as a container-like structure configured to receive one or several box-shaped stowage containers.

The term "container-like structure" relates to an enclosure providing stowage volume. The stowage volume can be completely enclosed and can be accessible via a movable enclosure such as a door or flap. The stowage volume can also be partly enclosed providing an open access opening.

The box structure can be provided as a box solely for the use onboard an aircraft. Supply delivery can be provided by delivering box-shaped stowage containers to the aircraft by a carrier suitable for operation on ground and within airport facilities. Upon delivery, the box-shaped stowage containers are reloaded into the box structures for further handling onboard the aircraft. The box structures stay on board.

In an example, not shown in detail, at least one further of the roller bearing devices 10 is provided at an upper edge or corner portion of the movable stowage carrier.

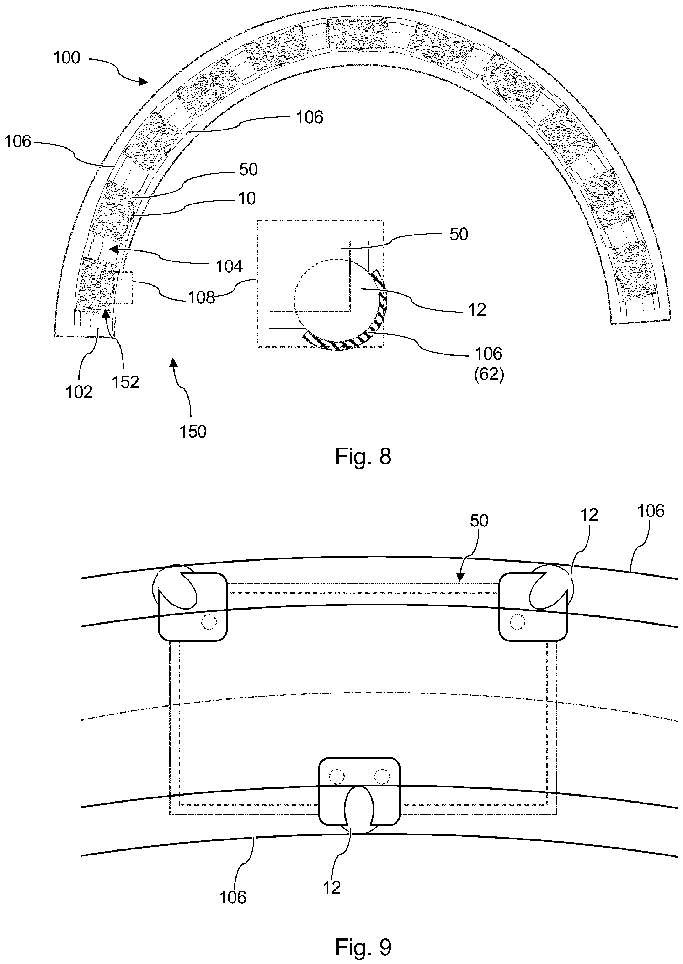

As an option, guidance rails 62 are indicated. The guidance rails 62 may provide a loose form fit engagement with the spherical rolling elements 12 (see also Fig. 8).

Fig. 8 shows an example of a stowage system 100 for cabin service supply in the context of a supply system 150 for cabin service supply as an option. The stowage system 100 for cabin service supply comprises a plurality of the movable stowage carriers 50 according to one of the preceding examples. The stowage system 100 further comprises a longitudinally extending stowage space 102 configured to be conform with an inner wall of an aircraft fuselage structure. A guidance 104 is provided along at least a part of the longitudinally extending stowage space.

The term "stowage space" relates to a space provided for arranging the stowage containers or boxes or trolleys. As an example, the stowage space is provided for allowing to temporarily store supply for the onboard cabin service or other material and equipment used ruing operation of the aircraft. As an example, the stowage space is filled up with supply before the flight and supply is taken from the stowage space during the flight. Waste or other parts occurring during flight can be stored in the stowage space and then discharged on the ground upon arriving at an airport.

In an example, the guidance 104 comprises at least one bottom guiderail 106 on one inner side of the stowage space 102. The guiderail 106 interacts with the roller bearing devices 10 on the first side of the carrier support structure 50.

The term "bottom guiderail" relates to a guiderail arranged in a floor section such that the roller bearing device are in contact with the guiderail. In an example, the guiderail provides a lateral abutting contact surface for the roller bearing devices. In another example, the guiderail provides a resting contact surface for the roller bearing devices. In a further example, the guiderail provides a lateral and resting contact surface for the roller bearing devices.

The term "interacts" relates to the guiding effect of the guiderail.

In an example, the guiderail 106 is provided for movably engaging with the spherical rolling elements 10 of the roller bearing devices on the first side of the carrier support structure 50.

The term "movably engaging" relates to an engagement of the guiderail with the spherical rolling elements, such as holding the spherical rolling elements by the rail in one or two directions, while still allowing a relative movement of the spherical rolling elements along the guiderail.

In an example, the guiderail is provided with a C-shaped cross-section. In an option, the stowage space is curved, e.g. following the contour of an aircraft in an aft section of an aircraft, and the guiderail is provided on the concave inner side of the curved stowage space.

In an option, the guiderail is configured to provide hold of the movable stowage carriers in a vertical direction.

In another option, a second bottom guiderail is provided on the other side of the stowage space, which guiderail also interacts with the roller bearing devices on the second side of the carrier support structure.

In an option, the stowage space is curved, e.g. following the contour of an aircraft in an aft section of an aircraft, and the bottom guiderail is provided on the concave inner side of the curved stowage space. In another option, the second bottom guiderail is provided on the convex inner side of the curved stowage space.

A broken line frame 108 indicates a detail of the spherical rolling element 12 engaging with the guiderail 106. The detail is shown in the center part of Fig. 8 in a lateral side view. The guiderail 106, e.g. the guidance rail 62, is having a curved cross-section in order to provide a race track for the spherical rolling elements 12, while also engaging them to provide a holding function in the horizontal directions and also in the vertical direction.

In another option, the vertical engagement is omitted and the engagement is only provided in a horizontal sense. An upper, additional guide rail is provided to provide upper support for the containers.

Fig. 9 shows further details of the stowage system shown in Fig. 8.

As indicated above, in an option, the carriage structure 56 is provided as a frame-like structure 64 configured to receive one or several box-shaped stowage containers.

Fig. 10 shows another option of the stowage system for cabin service supply. The system comprises a plurality of the frame-like structures 64. They can be stored and transported in a compact manner by a carriage 66 with a plurality of receiving slots 68 provided by frames 70 mounted to an upright frame 72 having a plurality of bottom wheels 74 for moving onboard the aircraft, and, in an option, for movement outside the aircraft. A handlebar 76 indicates manual movability, but also motorized movement is provided as an option.

As an example, the wheels 74 allow movement across rougher surfaces common in airports, as compared to the roller bearings that are more suitable for only onboard use with its finer and cleaner surfaces.

The frame dimensions 78 are in accordance with galley dimensions.

The carriage 66 is also referred to as ant principal carrier. The carrier can be parked in front of the box garage. As an option, carriers can be loaded with the frame-like structures 64 which themselves can be loaded with box-like containers. As an advantage, only a few carriers inside the aircraft are needed. In an option, carrier/s is/are not leaving the aircraft. This means less space occupied by carries like trolleys, and reduced load for the aircraft.

Moving supply on board when loading the aircraft is made possible by the spherical roller bearings. A flexible configuration inside the galley is thus possible without any weight impact on the flight attendance crew, because the load is always ball supported.

In an option it is provided a rail and guidance system for statically fully determined transport units. In a rear section of an aircraft, a curved rail and guidance system is provided. As an option, a rail and guidance locking system is provided for crash resistance. The rail and guidance system allows for stepwise movable transport boxes. The rail and guidance system comprises lateral guidance rails for the local removal of boxes. In an option, a standardized modular transport system for freight transport is provided. External transport of transport boxes may be arranged in units with double space. An internal carrier with guidance rails provides a flexible assembly with internal freight transport and handling

The term "frame-like structure" relates to a construction that provides the rigid mount of the roller bearing devices and that provides load transfer from the box-shaped stowage containers to the roller bearing devices.

The carriage structure can be provided as a carriage solely for the use onboard an aircraft. Supply delivery can be provided by delivering box-shaped stowage containers to the aircraft by a carrier suitable for operation on ground and within airport facilities. Upon delivery, the box-shaped stowage containers are reloaded onto the carriage structures for further handling onboard the aircraft. The carriage structures stay on board.

In an option, also shown in Fig. 8, a supply system 150 for cabin service supply is provided that comprises at least one trolley for moving along a cabin space of an aircraft. Further, a plurality of the movable stowage carriers 50 according to one of the preceding examples is provided. At least one trolley is configured for reloading cabin service supply from and to the movable stowage carriers.

The term "cabin service supply" relates to all different kind of supply provided for passengers in the cabin area. The cabin service supply may comprise serving beverages, food or selling items or handing out equipment or parts relating to onboard entertainment. The cabin service supply also relates to collecting waste and residuals resulting from passengers being present in the cabin space. The cabin service supply may also relate to serving lavatories with towels, soap or toilet paper.

In an example, standard units are provided by the movable stowage carriers, which units are reloaded into the at least one trolley being a commonly used trolley.

In an example, the at least one trolley comprises a loading platform for at least one of the movable stowage carriers.

In an example, the at least one trolley comprises a horizontally extending base part with a wheel arrangement and a vertically extending handling part with a handlebar to manually move the at least one trolley. As an option, the movable stowage carriers are provided like containers with movable door parts.

In an option, also a combination of one of the examples of the stowage system and one of the examples of the supply system is provided.

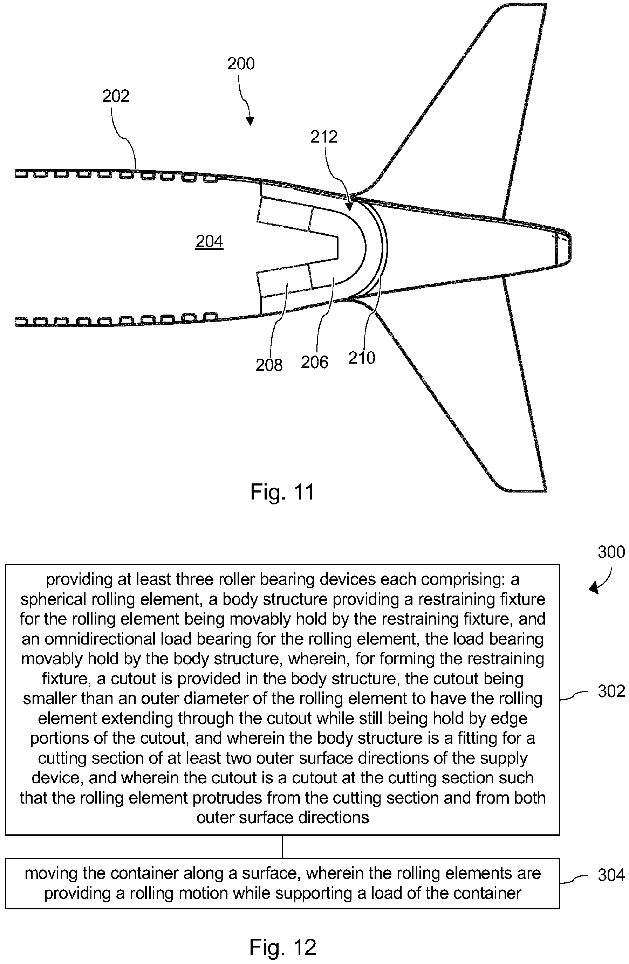

Fig. 11 shows an example of an aircraft 200 with a supply system for cabin service supply. The aircraft 200 comprises a fuselage 202 with a cabin area 204. The cabin area 204 comprises a galley 206. For supply of at least the galley 206, it is provided at least one of the group of: a plurality of the movable stowage carriers 50 for cabin service supply according to one of the examples above, and a stowage system 100 for cabin service supply according to one of the examples above, and a supply system 150 for cabin service supply according to the example above.

In Fig. 11, also lavatories 208 are provided, or other monuments needed in the rear cabin space. Further, a pressure bulkhead 210 is indicated. A longitudinal space 212 is shown for accommodating the plurality of storage containers.

In another option, a vehicle like a coach, train or ship is provided with a cabin area and a galley. For supply of at least the galley, it is provided at least one of the group of: i) a plurality of the movable stowage carrier for cabin service supply according to one of the examples above; ii) a stowage system for cabin service supply according to one of the examples above; and iii) a supply system for cabin service supply according to the example above.

Fig. 12 shows basic steps of an example of a method 300 for moving a container onboard a vehicle. The method 300 comprises the following steps:
- Providing 302 at least three roller bearing devices according to one of the claims 1 to 4 to a container; and
- Moving 304 the container along a surface, wherein the rolling elements are providing a rolling motion while supporting a load of the container.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A roller bearing device (10) for a movable supply device, the roller device comprising:
- a spherical rolling element (12);
- a body structure (14) providing a restraining fixture (16) for the rolling element being movably hold by the restraining fixture; and
- an omnidirectional load bearing (18) for the rolling element, the load bearing movably hold by the body structure;
wherein, for forming the restraining fixture, a cutout (20) is provided in the body structure, the cutout being smaller than an outer diameter of the rolling element to have the rolling element extending through the cutout while still being hold by edge portions of the cutout;
wherein the body structure is a fitting for a cutting section of at least two outer surface directions of the supply device; and
wherein the cutout is a cutout at the cutting section such that the rolling element protrudes from the cutting section and from both outer surface directions.

2. Device according to claim 1, wherein the body structure is an edge fitting for a box-shaped container; and
wherein the cutout is a cutout at the edge of the edge fitting such that the rolling element protrudes from the edge and from both outer sides of the edge fitting.

3. Device according to claim 1 or 2, wherein the body structure is a corner fitting for a box-shaped container; and
wherein the cutout is a cutout at the corner point of the corner fitting such that the rolling element protrudes from the corner and from all three outer sides of the corner fitting.

4. A movable stowage carrier (50) for cabin service supply, the carrier comprising:
- a carrier support structure (52); and
- at least three roller bearing devices (10) according to one of the preceding claims;
wherein the carrier support structure is provided as:
i) a carriage structure (56) configured to receive a box-shaped stowage container; or
ii) a box structure (54) enclosing a stowage volume;
wherein the at least three roller bearing devices are mounted to the carrier support structure; and
wherein a first and a second of the at least three roller bearing devices are provided at bottom corner portions on a first side of the carrier support structure.

5. Carrier according to claim 4, wherein a third roller bearing device is provided at:
i) a bottom middle portion on a second side of the carrier support structure opposite to the first side; or
ii) a third corner portion, wherein the carrier support structure is provided with a triangular bottom section.

6. Carrier according to claim 4, wherein four roller bearing devices are provided at the four bottom corners; wherein the carrier support structure is provided with a rectangular bottom section.

7. Carrier according to one of claims 4 to 6, wherein the carriage structure is provided as a frame-like structure configured to receive one or several box-shaped stowage containers.

8. Carrier according to one of claims 4 to 6, wherein the box structure is provided as a container-like structure configured to receive one or several box-shaped stowage containers.

9. Carrier according to one of claims 4 to 8, wherein at least one further roller bearing device is provided at an upper edge or corner portion of the movable stowage carrier.

10. A stowage system (100) for cabin service supply, comprising:
- a plurality of the movable stowage carriers (50) according to one of the claims 4 to 9; and
- a longitudinally extending stowage space (102) configured to be conform with an inner wall of an aircraft fuselage structure;
wherein a guidance (104) is provided along at least a part of the longitudinally extending stowage space.

11. Stowage system according to claim 10, wherein the guidance comprises at least one bottom guiderail (106) on one inner side of the stowage space, which guiderail interacts with the roller bearing devices on the first side of the carrier support structure.

12. Stowage system to claim 10 or 11, wherein the guiderail is provided for movably engaging with the spherical rolling elements of the roller bearing devices on the first side of the carrier support structure.

13. A supply system (150) for cabin service supply, comprising:
- at least one trolley for moving along a cabin space of an aircraft; and
- a plurality of movable stowage carriers (50) according to one of the claims 4 to 9;
wherein at least one trolley is configured for reloading cabin service supply from and to the movable stowage carriers.

14. An aircraft (200) comprising a fuselage (202) with a cabin area (204);
wherein the cabin area comprises a galley; and wherein for supply of at least the galley, it is provided at least one of the group of:
i) a plurality of the movable stowage carrier for cabin service supply according to one of claims 4 to 9;
ii) a stowage system for cabin service supply according to one of claims 10 to 12; and
iii) a supply system for cabin service supply according to claim 13.

15. A method (300) for moving a container onboard a vehicle, comprising the following steps:
- providing (302) at least three roller bearing devices according to one of the claims 1 to 4 to a container; and
- moving (304) the container along a surface, wherein the rolling elements are providing a rolling motion while supporting a load of the container.
